Europäisches Patentamt

European Patent Office

Office européen des brevets

(19)

(11) **EP 0 839 678 B1**

(12) **FASCICULE DE BREVET EUROPEEN**

(45) Date de publication et mention
de la délivrance du brevet:
**29.05.2002 Bulletin 2002/22**

(51) Int Cl.⁷: **B60H 1/00**

(21) Numéro de dépôt: **97117436.2**

(22) Date de dépôt: **09.10.1997**

(54) **Installation de climatisation à capteur de température, notamment pour véhicule automobile**

Klimaanlage mit Temperatursensor, insbesondere für ein Kraftfahrzeug

Air conditioner with a temperature sensor, in particular for a motor vehicle

(84) Etats contractants désignés:
**DE ES GB IT**

(30) Priorité: **31.10.1996 FR 9613365**

(43) Date de publication de la demande:
**06.05.1998 Bulletin 1998/19**

(73) Titulaire: **Valeo Electronique**
**94042 Créteil (FR)**

(72) Inventeur: **Dias, Dominique**
**78960 Voisins le Bretonneux (FR)**

(74) Mandataire: **Gérard, Michel et al**
**Valeo Climatisation**
**Propriété Industrielle**
**8, rue Louis-Lormand**
**B.P. 13**
**78321 La Verrière Cedex (FR)**

(56) Documents cités:
**DE-A- 19 629 131      US-A- 4 460 035**

- **PATENT ABSTRACTS OF JAPAN vol. 097, no.
  002, 28 février 1997 & JP 08 258535 A
  (NIPPONDENSO CO LTD), 8 octobre 1996,**
- **PATENT ABSTRACTS OF JAPAN vol. 013, no.
  094 (M-804), 6 mars 1989 & JP 63 287619 A
  (NIPPON DENSO CO LTD), 24 novembre 1988,**
- **PATENT ABSTRACTS OF JAPAN vol. 017, no.
  483 (M-1472), 2 septembre 1993 & JP 05 116522
  A (NISSAN MOTOR CO LTD), 14 mai 1993,**

**Description**

L'invention concerne le domaine des installations de climatisation, notamment d'un habitacle de véhicule automobile à moteur, et plus particulièrement les installations comprenant :

- une boucle dite "froide" comportant au moins un compresseur, un condenseur et un évaporateur,
- une boucle dite "chaude" comportant un radiateur de chauffage alimenté par un fluide de refroidissement du moteur,
- un boîtier, logeant des volets de distribution et de mixage, le radiateur de chauffage, ainsi que l'évaporateur, pour traiter de l'air extérieur et/ou recirculé et le distribuer dans l'habitacle du véhicule,
- un groupe moto-ventilateur propre à alimenter ledit boîtier en air extérieur et/ou recirculé,
- un capteur propre à mesurer la température dans l'habitacle (dite température interne),
- un module pour la saisie de paramètres de réglage de l'installation par un passager logé dans l'habitacle, et
- des moyens de commande pour définir des réglages des composants des boucles froide et chaude à partir des paramètres saisis, de la température interne mesurée, d'une température à l'extérieur de l'habitacle (dite température externe), et de l'état de fonctionnement du moteur.

Les installations de ce type, les plus simples, effectuent une régulation de la température interne en comparant la température saisie par le passager et la température interne mesurée, puis en déduisant de cette comparaison des réglages des branches froide et chaude. Une optimisation des réglages est ensuite effectuée lorsque l'installation comporte un capteur de température externe. Ces installations nécessitent donc, pour fonctionner, au moins deux capteurs.

L'homme de l'art a mis au point des installations plus complexes qui utilisent des capteurs propres à mesurer la ou les températures de l'évaporateur et/ou de l'eau (ou plus généralement du liquide de refroidissement) du moteur. Certaines de ces installations sont également équipées d'un capteur de température de l'air soufflé distribué dans l'habitacle, ainsi qu'éventuellement d'un capteur d'ensoleillement uni- ou multi-directionnel.

Un tel nombre de capteurs augmente notablement le coût, la complexité et la probabilité de panne ou de dysfonctionnement de l'installation.

JP 08258535 A montre une installation conforme au préambule de la revendication 1.

En conséquence, un but de l'invention est de procurer une installation de climatisation qui ne présente pas tout ou partie des inconvénients précités.

L'invention propose à cet effet une installation comme définie dans la revendication 1.

De la sorte, on réalise une installation qui ne nécessite qu'un unique capteur de température à l'intérieur de l'habitacle (température interne).

Préférentiellement lorsque l'installation ne fonctionne pas, l'estimation de la valeur de la température externe s'effectue par identification à la valeur de la température interne mesurée.

De façon avantageuse, l'installation comprend une seconde sous-mémoire pour stocker des données représentatives d'une équation ou de points de fonctionnement d'une de ses parties au moins, et susceptible d'être lue par le premier module.

Dans un premier mode de réalisation, lorsque l'installation fonctionne en mode stabilisé, l'estimation de la valeur de la température externe s'effectue par résolution d'une équation différentielle stockée dans la seconde sous-mémoire. Cette équation est relative à des constantes dépendant de caractéristiques géométriques et structurelles de l'habitacle (comme par exemple le volume de l'habitacle, la surface d'échange d'énergie entre l'habitacle et l'extérieur, et la surface de l'habitacle exposée au soleil), ainsi qu'à des flux d'énergie entre, d'une part, l'installation et l'habitacle (flux entrant), et d'autre part, ledit habitacle et l'extérieur (flux sortant), chacun desdits flux dépendant de la température interne mesurée.

Cela permet d'effectuer une régulation très fine de l'installation puisque l'équation différentielle mémorisée dans la seconde sous-mémoire peut être aussi compliquée que le degré d'affinement l'exige.

Dans un second mode de réalisation de l'invention, la seconde sous-mémoire stocke des points de fonctionnement d'une partie au moins des composants de l'installation sous forme d'une première table de correspondance entre des valeurs de température externe et des multiplets contenant chacun des valeurs de réglages des positions des volets de mixage et une température interne. Ainsi, lorsque l'installation fonctionne en mode stabilisé, le premier module peut estimer la valeur de la température externe par détermination d'un multiplet, stocké dans la table de correspondance, dont les valeurs sont sensiblement identiques à celles des réglages en cours des volets de mixage et de la température interne mesurée.

Il en résulte que l'estimation de la température externe s'effectue en recherchant le point de fonctionnement de l'installation auquel correspond l'un des multiplets mémorisés dans la table de correspondance.

Selon une autre caractéristique de l'invention, avant chaque mise en fonctionnement de l'installation, le premier module stocke dans la première sous-mémoire la dernière valeur estimée de la température externe (laquelle est dite valeur en cours).

Il en résulte que la température externe, qui est utilisée au démarrage suivant de l'installation, est la dernière température externe estimée par le premier module hors fonctionnement de l'installation.

Avantageusement, les moyens de commande de l'installation peuvent définir les réglages des composants des boucles froide et chaude à partir, en outre, d'un état de fonctionnement et d'une température d'eau du moteur, laquelle est estimée par un second module à partir de la valeur de la température externe estimée par le premier module et de l'état de fonctionnement du moteur. Pour ce faire, il est préférable de prévoir une troisième sous-mémoire pour stocker une première fonction décrivant des lois d'évolution de la température d'eau en fonction, d'une part, du temps écoulé depuis une première mise en fonctionnement du moteur, et d'autre part d'une valeur de température externe estimée.

De la sorte, et toujours avec le seul capteur de température interne, il est également possible d'estimer la valeur en cours de la température de l'eau circulant dans le moteur.

Toujours avantageusement, les moyens de commande de l'installation peuvent définir les réglages des composants des boucles froide et chaude à partir, en outre, d'une température de l'évaporateur, laquelle est estimée par un troisième module à partir de la valeur de la température externe estimée, de la valeur de la température interne mesurée et de l'état de fonctionnement du compresseur. Pour ce faire, il est préférable de prévoir une quatrième sous-mémoire dans laquelle se trouve stockée une deuxième fonction décrivant des lois d'évolution de la température de l'évaporateur en fonction, d'une première part, du temps écoulé depuis une première mise en fonctionnement du compresseur, d'une seconde part d'une valeur de température externe estimée, et d'une troisième part d'une valeur de température interne mesurée.

De la sorte, et toujours avec le seul capteur de température interne, il est également possible d'estimer la valeur en cours de la température de l'évaporateur.

Lorsque l'installation comporte les second et troisième modules, il est également avantageux de prévoir un quatrième module pour estimer la température de l'air soufflé, traité par le boîtier et distribué dans l'habitacle, à partir d'au moins, la valeur de la température d'eau estimée, de la valeur de la température de l'évaporateur estimée, de l'état de fonctionnement du groupe moto-ventilateur (niveau de puissance du pulseur) et des réglages des volets de mixage. Pour ce faire, il est préférable de prévoir une cinquième sous-mémoire pour stocker une troisième fonction décrivant des lois d'évolution de la température de l'air soufflé en fonction, d'une première part, des réglages des volets de mixage, d'une seconde part, d'une valeur de température d'eau estimée, d'une troisième, part d'une valeur de température de l'évaporateur estimée, et d'une quatrième part de l'état de fonctionnement du pulseur.

Ainsi, et toujours avec le seul capteur de température interne, il est également possible d'estimer la valeur en cours de la température de l'air soufflé distribué dans l'habitacle.

Les premier, second, troisième et quatrième modules peuvent être avantageusement réalisés sous forme d'un composant électronique, de type puce à mémoire ou ASIC, chacune desdites première, seconde, troisième, quatrième et cinquième sous-mémoires formant alors ladite mémoire. Cela permet de regrouper toutes les fonctions d'estimation des différentes températures en un unique composant qui peut d'ailleurs être intégré directement dans les moyens de commande.

Dans le but de renforcer encore plus les performances de l'installation, on peut prévoir des moyens pour corriger l'une au moins des valeurs des températures estimées choisies parmi la température extérieure et la température d'eau. Pour ce faire, les moyens de correction peuvent comporter avantageusement :

- un cinquième module pour calculer une valeur théorique de température interne à partir de la température de l'air soufflé, de la température externe estimée et de l'état de fonctionnement du groupe moto-ventilateur,
- un sixième module pour calculer un premier écart de température entre la température interne mesurée et la température interne théorique calculée,
- un septième module pour calculer, à partir du premier écart de température, un second écart de température d'eau et/ou un troisième écart de température externe, et
- un huitième module pour corriger la température d'eau estimée à un instant donné, à partir du second écart de température d'eau, et/ou un neuvième module propre à corriger la température externe estimée à un instant donné, à partir du troisième écart de température externe.

Bien entendu, ces modules de correction peuvent être intégrés dans le composant électronique formant les premier à quatrième modules.

Dans la description qui suit, faite à titre d'exemple, on se réfère aux dessins annexés, sur lesquels :

- la figure 1 est un schéma-bloc illustrant une installation de climatisation selon l'invention;

- la figure 2 est un schéma-bloc illustrant une partie de l'installation selon l'invention;

- les figures 3A et 3B sont des diagrammes illustrant respectivement l'état de fonctionnement du moteur en fonction du temps et l'évolution de la température d'eau du moteur en fonction du temps;

- les figures 4A et 4B sont des diagrammes illustrant respectivement l'état de fonctionnement du compresseur en fonction du temps et l'évolution de la température de l'évaporateur en fonction du temps;

- la figure 5 est un diagramme illustrant l'évolution de la température de l'air soufflé en fonction de la position des volets de mixage, et pour trois valeurs différentes de température externe; et

- la figure 6 est un diagramme illustrant l'évolution de la position des volets de mixage en fonction de la température externe, et pour deux modes de fonctionnement différents de l'installation.

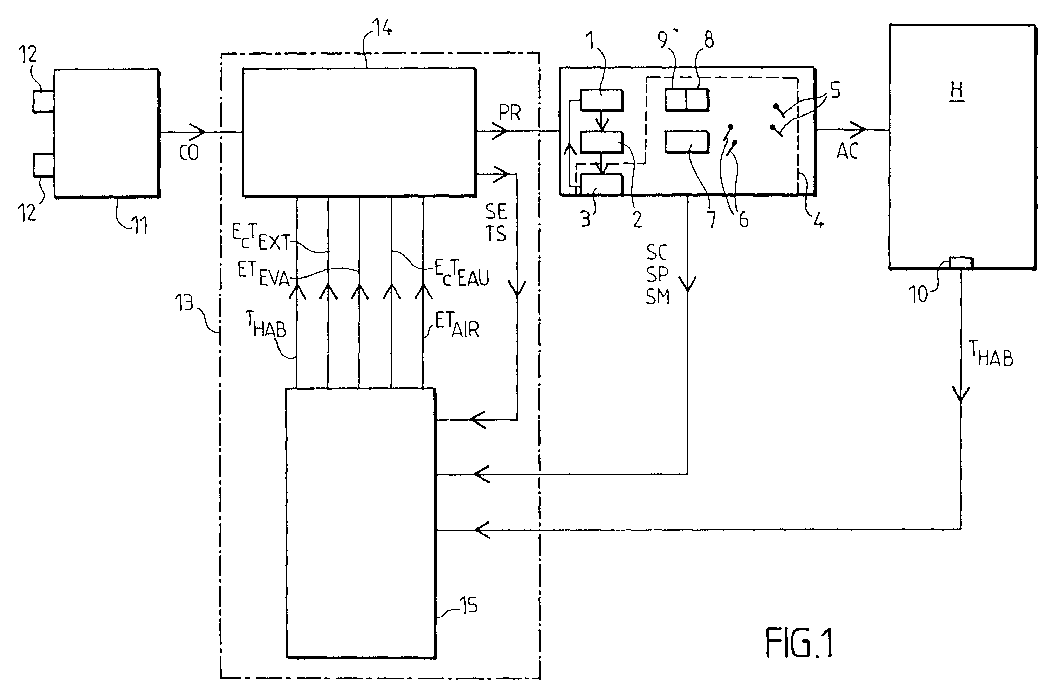

On se réfère tout d'abord à la figure 1 pour décrire, de façon générale, une installation de climatisation d'un habitacle, par exemple de véhicule automobile à moteur.

L'installation comprend tout d'abord une boucle dite "froide" comportant notamment un compresseur 1 propre à comprimer sous forme de gaz chaud un fluide frigorigène qui lui parvient sous forme de gaz froid, un condenseur 2 propre à condenser sous forme de liquide chaud le fluide frigorigène comprimé par le compresseur 1, et un évaporateur 3 propre à transformer le fluide frigorigène condensé en gaz froid destiné au compresseur 1.

L'installation comporte ensuite une boucle dite "chaude" comprenant un boîtier 4 de traitement et de distribution d'air destiné à l'habitacle H du véhicule et un groupe moto-ventilateur 8 propre à alimenter le boîtier en air extérieur et/ou recirculé en vue de son traitement. Le boîtier 4 loge notamment des volets de distribution 5 destinés à gérer la distribution de l'air, traité à l'intérieur du boîtier, au niveau de bouches de distribution situées en des endroits choisis de l'habitacle H, des volets de mixage 6 ou des électrovannes destinés à régler le mélange d'air froid et d'air chaud à l'intérieur du boîtier, avant distribution de cet air traité, un radiateur de chauffage 7 pour réchauffer l'air extérieur et/ou recirculé provenant du groupe moto-ventilateur 8, ainsi que l'évaporateur 3 destiné à refroidir l'air extérieur et/ou recirculé en provenance de ce même groupe moto-ventilateur 8.

Sur la figure 1, le boîtier 4 est matérialisé par des traits pointillés. Les positions respectives des différents composants logés dans ce boîtier 8 n'ont pas de rapport direct avec la réalité, ces composants n'étant placés dans le boîtier que pour faciliter la compréhension de la description.

Le groupe moto-ventilateur 8 comporte un pulseur 9 dont la puissance peut être adaptée selon les besoins de l'installation.

L'installation comprend également un capteur de température 10 logé en un endroit choisi à l'intérieur de l'habitacle H, afin d'en mesurer la température, laquelle est dite température interne $T_{HAB}$.

L'installation comprend en outre un module de saisie 11 muni d'organes de saisie 12 comme par exemple des boutons rotatifs et/ou des touches digitales pour permettre la saisie par un passager logé dans l'habitacle du véhicule des paramètres de réglage de l'installation. Ce module de saisie est logé dans la planche de bord du véhicule, laquelle se trouve installée dans l'habitacle.

Pour permettre l'instauration des réglages correspondant aux paramètres saisis par le passager à l'aide du module de saisie 11, l'installation comprend un boîtier de commande 13 matérialisé par une ligne en tireté-point et comportant notamment un module de commande 14 permettant de définir des réglages des différents composants des boucles froide et chaude à partir des paramètres saisis par le passager et d'autres paramètres sur lesquels on reviendra plus loin.

Une installation de ce type permet d'effectuer une régulation de la température dans l'habitacle H. Cette régulation peut être de deux types. Un premier type dit "automatique" dans lequel la température interne de régulation est définie par le constructeur et fixée à environ 20° C. Un second type dit "manuel" dans lequel la température interne de régulation est choisie par l'utilisateur par saisie au niveau du module de saisie 11.

Que l'on soit en mode automatique ou en mode manuel, une fois les paramètres de réglage saisis par l'utilisateur au niveau du module de saisie 11, le module de commande 14 logé dans le boîtier de commande 13 mémorise ces paramètres saisis, puis commande le réglage de l'installation en fonction uniquement de la température interne $T_{HAB}$.

La température interne $T_{HAB}$ mesurée à l'aide du capteur de température interne 10 est alors comparée à la température de régulation saisie. En fonction de l'écart qui existe entre ces deux températures, le module de commande 14 calcule les réglages qui doivent être instaurés au niveau des composants des boucles froide et chaude.

Ainsi, le module de commande peut, par exemple, décider de mettre en fonctionnement la boucle froide de façon à refroidir, à l'aide de l'évaporateur 3, la température de l'air à distribuer dans l'habitacle H. Le fonctionnement de cette boucle froide peut être adapté selon l'amplitude de l'écart entre la température interne $T_{HAB}$ et la température de régulation saisie. Pour ce faire, il est possible de faire varier la température $T_{EVA}$ de l'évaporateur 3.

Puis, le module de commande 14 calcule les positions respectives des volets de mixage 6 et de distribution 5.

En raison des échanges d'énergie entre l'habitacle et l'extérieur (flux d'énergie sortant), la température qui règne à l'extérieur de l'habitacle, dite "température externe" $T_{EXT}$, a une influence importante sur la régulation de température à l'intérieur de l'habitacle. Il est donc important de connaître ladite température externe $T_{EXT}$ pour pouvoir ajuster les réglages des composants des boucles froide et chaude.

Dans les installations classiques, la température externe $T_{EXT}$ est obtenue à l'aide d'un capteur de température logé à l'extérieur de l'habitacle.

L'invention procède de façon radicalement différente. En effet, la température externe $T_{EXT}$ est estimée à l'aide d'un module d'estimation de température 15 qui est de préférence logé dans le boîtier de commande 13.

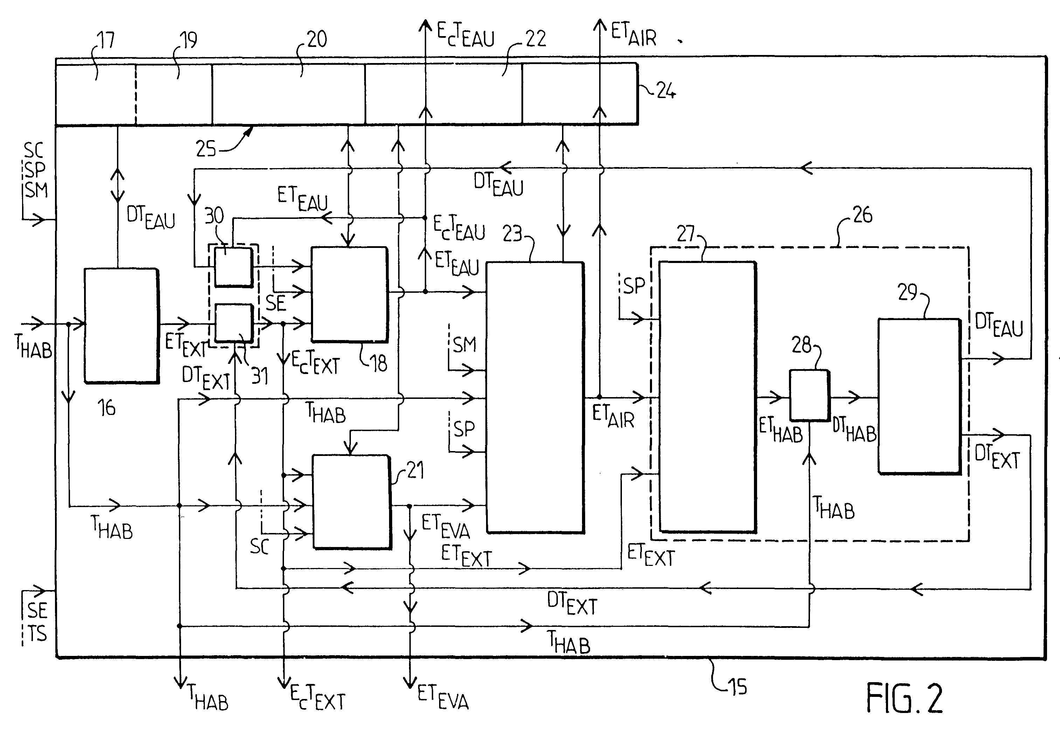

On se réfère maintenant plus particulièrement à la figure 2 pour décrire le module d'estimation de température 15.

Dans son mode de réalisation le plus simple, le module d'estimation de température comprend un premier module 16 connecté à une première sous-mémoire 17 destinée à stocker une valeur de température sur laquelle on reviendra plus loin.

Le premier module 16 est agencé de façon à produire une valeur estimée de la température externe $ET_{EXT}$ à partir de la seule connaissance de la valeur de la température interne mesurée $T_{HAB}$.

L'estimation de la température externe $ET_{EXT}$ s'effectue de préférence comme suit.

Lorsque l'installation fonctionne mais que la température interne mesurée $T_{HAB}$ est sensiblement différente de la température saisie TS (mode dit "de convergence"), le premier module 16 fixe comme valeur de température estimée $ET_{EXT}$ la valeur de la température qui est stockée dans la première sous-mémoire 17.

La température qui se trouve stockée dans cette première sous-mémoire 17 est en fait la valeur que possédait la température externe estimée $ET_{EXT}$ hors fonctionnement de l'installation, juste avant sa mise en fonctionnement. Cette mémorisation du paramètre $ET_{EXT}$ dans la première sous-mémoire 17 est de préférence réalisée par le premier module 16, mais bien entendu elle peut être réalisée par le module de commande 14, lequel est, d'une part, le destinataire du paramètre $ET_{EXT}$, et d'autre part, le premier averti du désir du passager de mettre l'installation en fonctionnement.

Lorsque l'installation se trouve en régime dit "stabilisé", c'est-à-dire lorsque la température interne mesurée $T_{HAB}$ est sensiblement identique à la température de régulation saisie par le passager TS, deux modes d'estimation de la température externe peuvent être envisagés.

Dans un premier mode, le premier module 16 estime la valeur de la température externe $ET_{EXT}$ en résolvant une équation différentielle de flux du type de celle donnée ci-dessous :

$$[Cv_{AIR} \times V_{HAB} \times \Delta T_{HAB}/\Delta T] = [Cv_{AIR} \times Q_{AIR} \times (T_{AIR} - T_{HAB})]$$

$$+ [Ab \times S_{ENS} \times ENS] - [Cc \times S_{VEH} \times (T_{HAB} \; T_{EXT})] \quad (1)$$

Dans cette équation, $Cv_{AIR}$ indique la capacité thermique de l'air, $V_{HAB}$ indique le volume de l'habitacle du véhicule, $Q_{AIR}$ indique le débit d'air soufflé distribué dans l'habitacle du véhicule, $S_{ENS}$ indique la surface du véhicule exposée au soleil, et $S_{VEH}$ indique la surface d'échange entre l'habitacle et l'extérieur.

L'expression $[Cv_{AIR} \times Q_{AIR} \times (T_{AIR} - T_{HAB})]$ représente le flux d'énergie entrant dans l'habitacle, l'expression $[Ab \times S_{ENS} \times ENS]$ représente une constante qui ne dépend que des caractéristiques géométriques et structurelles de l'habitacle, et plus généralement du véhicule, et l'expression $[Cc \times S_{VEH} \times (T_{HAB} - T_{EXT})]$ représente le flux d'énergie sortant du véhicule.

Cette équation différentielle est stockée, par exemple sous forme de données numériques, dans une seconde sous-mémoire 19, pouvant être lue par le premier module 16. Elle peut être aisément résolue par les composants électroniques disponibles sur le marché.

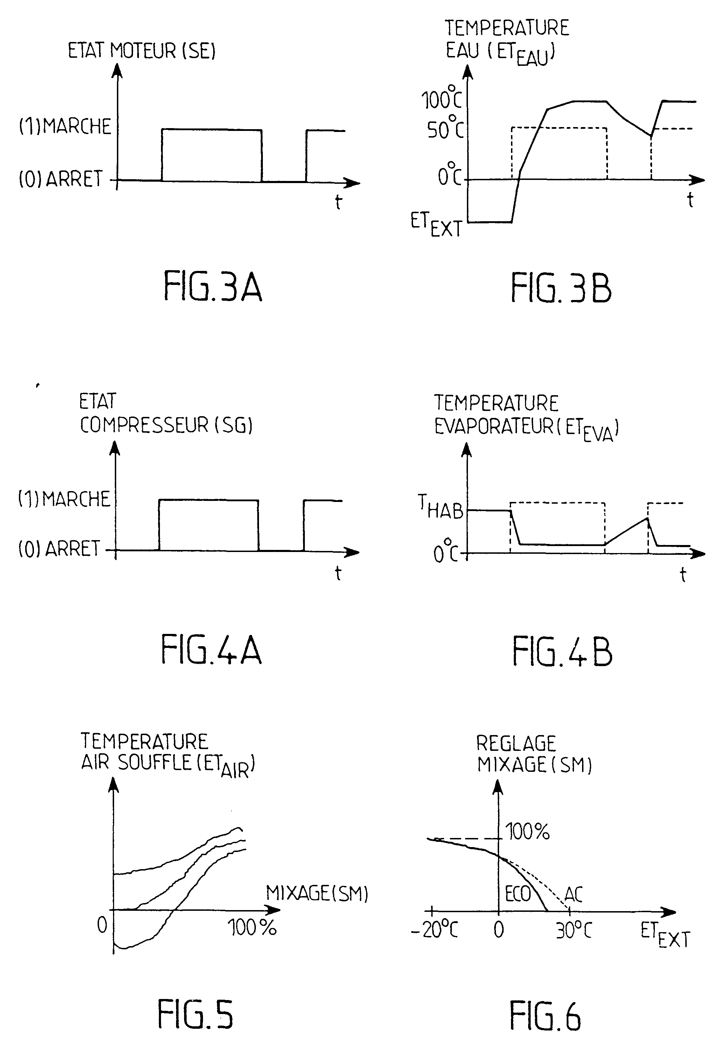

Dans un second mode, on prévoit une seconde sous-mémoire 19, pouvant être lue par le premier module 16, et dans laquelle se trouvent mémorisée, par exemple sous forme de données numériques, une première table de correspondance entre des valeurs de température externe $T_{EXT}$ et des multiplets qui contiennent chacun des valeurs de réglage des positions des volets de mixage 6 ainsi qu'une température interne $T_{HAB}$. En d'autres termes, la seconde sous-mémoire 19 stocke des courbes de fonctionnement d'une partie au moins de l'installation qui permettent, connaissant les réglages des volets de mixage fixés par le module de commande 14, d'en déduire la température externe $ET_{EXT}$. Deux de ces courbes sont illustrées sur la figure 6. Elles représentent deux modes de fonctionnement différents de l'installation de climatisation, la courbe en trait continu représentant un mode de fonctionnement de type économique, tandis que la courbe en pointillé représente un mode standard de fonctionnement.

Ce mode d'estimation de la température externe $ET_{EXT}$ n'est vraiment valable que lorsque l'installation est en mode stabilisé, puisque, les réglages des positions respectives des différents volets de mixage 6 ne sont réellement accessibles au premier module 16 qu'à partir du moment où le module de commande 14 de l'installation a déjà instauré lesdits réglages.

Le fonctionnement de l'installation dans ce second mode est le suivant. Après stabilisation des réglages, le premier module 16 reçoit la température interne mesurée $T_{HAB}$ par le capteur 10 et les informations représentatives des différents réglages du moteur et des composants des boucles froide et chaude, et notamment les positions des volets de mixage 6, du module de commande 14 ou des composants eux-mêmes. Le premier module 16 va alors consulter la table de correspondance stockée dans la seconde sous-mémoire 19 afin d'y trouver un multiplet dont les valeurs sont sensiblement identiques à celles des réglages en cours des volets de mixage 6 et de la température interne mesurée $T_{HAB}$. A ce multiplet correspond une température externe $ET_{EXT}$ dite "température externe estimée" qui peut alors être fournie par le premier module 16 au module de commande 14 afin que celui-ci ajuste, si nécessaire, les réglages de l'installation.

Lorsque l'installation ne fonctionne pas, on peut poursuivre l'estimation de la température externe $ET_{EXT}$ à l'aide de l'équation (1) donnée ci-avant. Pour ce faire, il suffit de considérer que le flux d'air entrant dans l'habitacle est nul, ce qui simplifie notablement l'équation (1).

Mais, lorsque l'installation ne fonctionne pas encore, il est préférable que le premier module fixe automatiquement la valeur de la température externe estimée $ET_{EXT}$ à la valeur de la température interne $T_{HAB}$ qui vient d'être mesurée à l'aide du capteur de température 10.

Comme cela est illustré sur la figure 2, le module d'estimation de température 15 peut réaliser de nombreuses autres fonctions que la seule estimation de la température externe $ET_{EXT}$.

Ainsi, le module de commande 14 peut être conçu pour effectuer un ajustement des réglages des composants des boucles froide et chaude à partir de la connaissance de la température d'eau $ET_{EAU}$ (ou plus généralement du liquide de refroidissement) du moteur. Pour ce faire, l'installation selon l'invention comporte, d'une part, un second module 18 pour estimer la température d'eau $ET_{EAU}$ du moteur à partir de la connaissance de la valeur de la température externe estimée $ET_{EXT}$ par le premier module 16 et de l'état de fonctionnement SE du moteur, fourni par le module de commande 14, d'autre part, une troisième sous-mémoire 20, pouvant être lue par le second module 18, et dans laquelle se trouve mémorisée, par exemple sous forme de donnée numérique, une première fonction décrivant des lois d'évolution de la température d'eau $ET_{EAU}$ en fonction, d'une part, du temps qui s'est écoulé depuis une première mise en fonctionnement du moteur et, d'autre part, d'une valeur de température externe estimée $ET_{EXT}$.

Le paramètre SE représentant l'état de fonctionnement du moteur ne peut prendre, comme cela est illustré sur la figure 3A, que deux valeurs. Une valeur nulle (0) lorsque le moteur est hors de fonctionnement, ou une valeur fixée à l'unité (1) (mode binaire) lorsque le moteur est en fonctionnement.

On a représenté sur la figure 3B une courbe d'évolution de la température d'eau $ET_{EAU}$ du moteur en fonction du temps, pour une valeur de température externe estimée $ET_{EXT}$ donnée. Se trouve également représentée sur cette figure 3B, en pointillé, l'état du moteur SE.

La fonction qui se trouve stockée dans la troisième sous-mémoire 20 possède comme variables l'état du moteur SE et la température externe estimée $ET_{EXT}$. En variante, on peut envisager de stocker dans la troisième sous-mémoire 20 une multitude de fonctions d'évolution de la température d'eau du moteur $ET_{EAU}$ représentatives respectivement d'une température externe estimée $ET_{EXT}$ et dont la seule variable est la donnée de l'état de fonctionnement du moteur SE.

Le fonctionnement du second module 18 est le suivant. A réception de l'état de fonctionnement du moteur SE et de la température externe $ET_{EXT}$ estimée par le premier module 16, le second module 18 utilise la fonction stockée dans la troisième sous-mémoire 20 avec les paramètres reçus et en tire une température d'eau estimée $ET_{EAU}$ qu'il adresse au module de commande 14 afin que celui-ci ajuste, si nécessaire, les réglages de l'installation.

Le module de commande 14 peut également être capable d'ajuster les réglages des composants des boucles froide et chaude à partir de la température de l'évaporateur 3. Dans ce cas, l'installation selon l'invention comprend, d'une part, un troisième module 21 pour estimer cette température de l'évaporateur $ET_{EVA}$ à partir de la valeur de la température externe estimée $ET_{EXT}$, de la valeur de la température interne mesurée $T_{HAB}$ et de l'état de fonctionnement SC du compresseur 1, et d'autre part, une quatrième sous-mémoire 22, pouvant être lue par le troisième module 21, et dans laquelle se trouve mémorisée une deuxième fonction décrivant des lois d'évolution de la température de l'évaporateur $ET_{EVA}$ en fonction, d'une première part, du temps écoulé depuis une première mise en fonctionnement du compresseur 1, d'une seconde part, d'une valeur de température externe estimée $ET_{EXT}$ et, d'une troisième part, d'une valeur de température interne mesurée $T_{HAB}$.

L'état de fonctionnement du compresseur SC est illustré sur la figure 4A. Il peut prendre deux valeurs différentes, la valeur 0 lorsque le compresseur 1 est hors de fonctionnement et la valeur 1 (mode binaire) lorsque le compresseur est en fonctionnement.

On a représenté sur la figure 4B une courbe d'évolution de la température évaporateur $ET_{EVA}$ en fonction du temps écoulé depuis la mise en fonctionnement du compresseur 1, pour une valeur de température interne mesurée $T_{HAB}$ donnée. Se trouve également sur la figure 4B, en pointillé, la matérialisation de l'état de fonctionnement SC du compresseur 1.

Le mode de fonctionnement du troisième module 21 est le suivant. A réception, d'une part, de la température externe estimée $ET_{EXT}$, d'une deuxième part, de la température interne mesurée $T_{HAB}$, et d'une troisième part, de l'état de fonctionnement du compresseur SC, le troisième module 21 utilise la seconde fonction, mémorisée dans la quatrième sous-mémoire 22, avec les paramètres reçus, et en déduit une estimation de la température de l'évaporateur $ET_{EVA}$ qu'il fournit ensuite au module de commande 14 afin qu'il ajuste, si nécessaire, les réglages des boucles froide et chaude de l'installation.

Le module de commande 14 peut également être conçu pour effectuer un ajustement de l'installation à partir de la connaissance de la température d'eau du moteur $ET_{EAU}$ et de la température estimée de l'évaporateur $ET_{EVA}$, mais également de la température d'air soufflé distribué par le boîtier 4 dans l'habitacle H. Dans ce cas, il est particulièrement avantageux de prévoir, en complément des second 18 et troisième 21 modules, d'une part, un quatrième module 23 pour estimer cette température d'air soufflé $ET_{AIR}$ à partir d'au moins la valeur de la température d'eau estimée $ET_{EAU}$ par le second module 18, de la valeur de la température de l'évaporateur $ET_{EVA}$ estimée par le troisième module 21, de l'état de fonctionnement du pulseur 9 du groupe moto-ventilateur 8 et des réglages SM des volets de mixage 6, et d'autre part, une cinquième sous-mémoire 24, pouvant être lue par le troisième module 23, et dans laquelle se trouve stockée une troisième fonction qui décrit des lois d'évolution de la température de l'air soufflé $ET_{AIR}$ en fonction, d'une première part, des réglages SM des volets de mixage 6, d'une seconde part, d'une valeur de température d'eau estimée $ET_{EAU}$, d'une troisième part, d'une valeur de température de l'évaporateur 3 estimée $ET_{EVA}$, et d'une quatrième part, de l'état de fonctionnement SP du pulseur 9.

Bien entendu, la troisième fonction peut être mémorisée sous forme d'une table de correspondance à multiplets.

On a représenté sur la figure 5 l'évolution de la température de l'air soufflé (troisième fonction) en fonction de la position des volets de mixage, pour plusieurs valeurs de température externe.

Le fonctionnement du quatrième module 23 est le suivant. A réception de la température de l'eau $ET_{EAU}$ estimée par le second module 18, de la température de l'évaporateur $ET_{EVA}$ estimée par le troisième module 21, de l'état de fonctionnement du pulseur 9 SP, de la température interne mesurée $T_{HAB}$, et des réglages SM des volets de mixage 6, le quatrième module 23 utilise la troisième fonction stockée dans la cinquième sous-mémoire 24 avec les paramètres reçus pour en déduire une estimation de la température de l'air soufflé $ET_{AIR}$ qu'il adresse ensuite au module de commande 14 afin qu'il ajuste, si nécessaire, les réglages de l'installation.

La ou les sous-mémoires associées respectivement aux différents modules 16, 18, 21 et 23, peuvent être soit intégrées directement dans le module concerné, soit être regroupées en une unique mémoire 25 comme cela est illustré sur la figure 2.

Les estimations effectuées à l'aide du ou des modules de l'installation peuvent être améliorées grâce à une boucle de contre-réaction comportant un module de correction 26, matérialisé sur la figure 2 par des traits discontinus.

Dans le mode de réalisation illustré sur la figure 2, le module de correction 26 permet de corriger la température d'eau estimée $ET_{EAU}$, ainsi que la température externe estimée $ET_{EXT}$.

Pour ce faire, le module de correction 26 comprend un cinquième module capable d'estimer une température théorique à l'intérieur de l'habitacle $ET_{HAB}$ à partir, d'une part, de l'état de fonctionnement du pulseur SP, d'une seconde part, de l'estimation de la température de l'air soufflé $ET_{AIR}$, et d'une troisième part, de l'estimation de la température externe $ET_{EXT}$. Cette estimation de la température théorique à l'intérieur de l'habitacle est effectuée grâce à une fonction mathématique connue de l'homme de l'art et sur laquelle il est inutile de revenir.

La température théorique interne estimée $ET_{HAB}$ est prise en compte par un septième module 28 qui reçoit également la mesure de la température interne $T_{HAB}$, et qui en déduit un écart de température $DT_{HAB}$. Cet écart théorique de température entre la température mesurée dans l'habitacle et la température théorique déterminée par le cinquième module 27 est représentatif des erreurs de modélisation effectuées par les modules successifs 16, 18, 21 et 23.

L'écart théorique de température interne $DT_{HAB}$ est ensuite adressé à un septième module 29 dont les composants électroniques (formant moyens de calcul) sont capables de fournir, d'une part, un écart théorique de température d'eau du moteur $DT_{EAU}$ et, d'une seconde part, un écart théorique de température externe $DT_{EXT}$. Ces deux écarts peuvent être calculés à partir de l'équation de flux (1) indiquée précédemment.

L'écart théorique de température d'eau $DT_{EAU}$ est ensuite adressé à un huitième module 30 qui reçoit également la température d'eau moteur $ET_{EAU}$ estimée et délivrée par le second module 18, et fournit à l'entrée de ce même second module 18 une valeur corrigée de la température d'eau qu'il vient d'estimer. Ainsi, le second module 18 peut recalculer (ou ajuster) la valeur de la température d'eau $ET_{EAU}$ qu'il venait d'estimer et délivrer au module de commande 14, ainsi qu'au quatrième module 23, une température d'eau estimée et corrigée $E_C T_{EAU}$.

En d'autres termes, on peut considérer que le second module 18 calcule une température d'eau estimée et corrigée à partir, d'une première part, de l'état de fonctionnement SE du moteur, d'une seconde part, de la température externe estimée $ET_{EXT}$, et d'une troisième part, de l'estimation de la température d'eau $ET_{EAU}$ qu'il a effectuée précédemment.

Le second écart de température $DT_{EXT}$ délivré par le septième module 29 est adressé à un neuvième module 31 qui est intercalé entre le premier module 16 et l'une des entrées du second module 18. Ce neuvième module 31 reçoit donc l'estimation de la température externe $ET_{EXT}$ effectuée par le premier module 16, l'écart de température $DT_{EXT}$ calculé par le septième module 29, et fournit au second module 18 une température externe estimée et corrigée $E_CT_{EXT}$. Ce paramètre corrigé est également adressé au module de commande 14.

En fait, sans module de correction 26, le module de commande 14 reçoit du module d'estimation 15 une température d'eau estimée $ET_{EAU}$ et une température externe estimée $ET_{EXT}$, tandis qu'en présence du module de correction 26, ce module de commande 14 reçoit du module d'estimation 15 une température d'eau estimée et corrigée $E_CT_{EAU}$ et une température externe estimée et corrigée $E_CT_{EXT}$.

L'installation selon l'invention permet d'effectuer une régulation complète de la température interne en ne faisant appel qu'à un unique capteur, à savoir le capteur de température logé à l'intérieur de l'habitacle. Désormais, il n'est plus nécessaire d'utiliser un capteur de température d'évaporateur, un capteur de température d'eau du moteur, un capteur de température à l'extérieur de l'habitacle, ou encore un capteur de température d'air soufflé distribué dans l'habitacle. Toutes ces températures sont désormais estimées par le module d'estimation de température de l'invention.

Un tel module d'estimation peut être réalisé sous la forme d'un unique composant électronique dédié, comme par exemple une puce à mémoire ou un ASIC. Par ailleurs, il peut être intégré directement dans le boîtier de commande 13, comme cela est illustré sur la figure 1.

L'invention ne se limite pas aux modes de réalisation décrits ci-avant, mais elle englobe toutes les variantes que pourra développer l'homme de l'art dans le cadre des revendications ci-après.

Ainsi, le module d'estimation ne pourra comporter que le seul premier module (module d'estimation de la température externe), ou bien ce premier module accompagné du second module et/ou du troisième module, ou bien encore le premier module accompagné des second, troisième et quatrième modules.

Par ailleurs, le module d'estimation pourra comprendre, ou non, un module de correction 26.

Enfin, on peut envisager de munir l'installation de capteurs auxiliaires capables de mesurer des paramètres qui ne sont pas modélisables, comme par exemple le niveau d'ensoleillement du véhicule, si l'on souhaite améliorer encore les performances de l'installation.

## Revendications

**1.** Installation de climatisation, notamment d'un habitacle de véhicule automobile à moteur, du type comprenant :

- une boucle dite "froide" comportant au moins un compresseur (1), un condenseur (2), et un évaporateur (3),
- une boucle dite "chaude" comportant un radiateur de chauffage (7) alimenté par un fluide de refroidissement du moteur,
- un boîtier (4), logeant des volets de distribution (5) et de mixage (6), le radiateur de chauffage (7), ainsi que ledit évaporateur (3), pour traiter de l'air extérieur et/ou recirculé et distribuer l'air traité dans l'habitacle (H) du véhicule,
- un groupe moto-ventilateur (8,9) propre à alimenter ledit boîtier (4) en air extérieur et/ou recirculé,
- un capteur (10) propre à mesurer la température dans l'habitacle ($T_{HAB}$) dite température interne,
- un module de saisie (11) propre à permettre la saisie de paramètres de réglage de l'installation, dont au moins la température, dite temperature saisie, par un passager logé dans l'habitacle, et
- des moyens de commande (14) propres à définir des réglages des composants (1-9) des boucles froide et chaude à partir des paramètres saisis, de la température interne mesurée ($T_{HAB}$), d'une température à l'extérieur de l'habitacle ($T_{EXT}$) dite température externe,

  **caractérisée en ce qu'**elle comprend une première sous-mémoire (17) propre à stocker une valeur de température, et un premier module (16) propre à fournir aux moyens de commande (14) une valeur de température externe estimée ($ET_{EXT}$) en fonction de l'état de fonctionnement de l'installation et des valeurs de température interne mesurée et de temperature saisie:

  * à partir de la valeur de la température interne mesurée ($T_{HAB}$), lorsque l'installation ne fonctionne pas ou bien lorsque ladite installation fonctionne et que la température interne mesurée est sensiblement égale à la température saisie, ou
  * à partir de la valeur de la température stockée dans la première sous-mémoire (17), lorsque l'installation fonctionne et que la température interne mesurée est sensiblement différente de la température saisie.

**2.** Installation selon la revendication 1, **caractérisée en ce que** le premier module (16) estime la valeur de la température externe, lorsque l'installation ne fonctionne pas, par identification à la valeur de la température interne mesurée ($T_{HAB}$).

**3.** Installation selon l'une des revendications 1 et 2, **caractérisée en ce qu'**elle comprend une seconde sous-mémoire (19) propre à stocker des données représentatives d'une équation ou de points de fonctionnement d'une de ses parties au moins, et susceptible d'être lue par le premier module (16).

**4.** Installation selon la revendication 3, **caractérisée en ce que** la seconde sous-mémoire (19) stocke des données formant une équation différentielle relative à des constantes dépendant de caractéristiques géométriques et structurelles de l'habitacle, ainsi qu'à des flux d'énergie entre, d'une part, l'installation et l'habitacle (flux entrant), et d'autre part, ledit habitacle et l'extérieur (flux sortant), chacun desdits flux dépendant de la température interne mesurée ($T_{HAB}$), et **en ce que** le premier module (16) est agencé pour estimer la valeur de la température externe ($ET_{EXT}$), lorsque ladite installation fonctionne et que la température interne mesurée est sensiblement égale à la température saisie, par résolution de ladite équation différentielle.

**5.** Installation selon la revendication 4, **caractérisée en ce que** les caractéristiques géométriques et structurelles comprennent le volume de l'habitacle, la surface d'échange d'énergie entre l'habitacle et l'extérieur, et la surface de l'habitacle exposée au soleil.

**6.** Installation selon la revendication 3, **caractérisée en ce que** la seconde sous-mémoire (19) stocke des points de fonctionnement théoriques agencés sous forme d'une première table de correspondance entre des valeurs de température externe et des multiplets contenant chacun des valeurs de réglages des volets de mixage (6) et une température interne, et **en ce que** ledit premier module (16) est agencé pour estimer la valeur de la température externe ($ET_{EXT}$), lorsque l'installation fonctionne et que la température interne mesurée ($T_{HAB}$) est sensiblement égale à la température saisie, par détermination d'un multiplet de la table de correspondance stockée dans la seconde sous-mémoire (19), dont les valeurs sont sensiblement identiques à celles des réglages en cours des volets de mixage (6) et de la température interne mesurée ($T_{HAB}$).

**7.** Installation selon l'une des revendications précédentes, **caractérisée en ce que** le premier module (16) est apte à stocker dans la première sous-mémoire (17), avant la mise en fonctionnement de ladite installation, la dernière valeur estimée (dite valeur en cours) de la température externe ($ET_{EXT}, E_C T_{EXT}$).

**8.** Installation selon l'une des revendications 1 à 7, **caractérisée en ce que** les moyens de commande (14) sont propres à définir les réglages des composants des boucles froide et chaude à partir, en outre, d'un état de fonctionnement (SE) et d'une température d'eau du moteur ($ET_{EAU}$), et **en ce que** ladite installation comprend un second module (18) propre à estimer la température de l'eau du moteur ($ET_{EAU}$) à partir de la valeur de la température externe estimée ($ET_{EXT}$) et de l'état de fonctionnement dudit moteur (SE), et à délivrer aux moyens de commande ladite température de l'eau estimée.

**9.** Installation selon la revendication 8, **caractérisée en ce qu'**elle comporte une troisième sous-mémoire (20) dans laquelle se trouve stockée une première fonction décrivant des lois d'évolution de la température d'eau ($ET_{EAU}$) en fonction, d'une part, du temps (t) écoulé depuis une première mise en fonctionnement du moteur, et d'autre part d'une valeur de température externe estimée ($ET_{EXT}, E_C T_{EXT}$).

**10.** Installation selon l'une des revendications 1 à 9, **caractérisée en ce que** les moyens de commande (14) sont propres à définir les réglages des composants des boucles froide et chaude à partir, en outre, d'une température ($ET_{EVA}$) de l'évaporateur (3), et **en ce que** ladite installation comprend un troisième module (21) propre à estimer la température de l'évaporateur (3) à partir de la valeur de la température externe estimée ($ET_{EXT}, E_C T_{EXT}$), de la valeur de la température interne mesurée ($T_{HAB}$) et de l'état de fonctionnement (SC) du compresseur (1), et à délivrer aux moyens de commande (14) ladite température de l'évaporateur estimée ($ET_{EVA}$).

**11.** Installation selon la revendication 10, **caractérisée en ce qu'**elle comporte une quatrième sous-mémoire (22) dans laquelle se trouve stockée une deuxième fonction décrivant des lois d'évolution de la température de l'évaporateur (3) en fonction, d'une première part, du temps (t) écoulé depuis une première mise en fonctionnement du compresseur (1), d'une deuxième part, d'une valeur de température externe estimée ($ET_{EXT}$), et d'une troisième part d'une valeur de température interne mesurée ($T_{HAB}$).

**12.** Installation selon l'une des revendications 8 et 9 combinée à l'une des revendications 10 et 11, **caractérisée en ce qu'**elle comprend un quatrième module (23) propre à estimer la température de l'air soufflé ($ET_{AIR}$), traité par le boîtier et distribué dans l'habitacle (H), à partir d'au moins, la valeur de la température d'eau estimée ($ET_{EAU}$), de la valeur de la température de l'évaporateur estimée ($ET_{EVA}$), de l'état de fonctionnement (SP) du groupe moto-ventilateur (8) et des réglages (SM) des volets de mixage (6), et à délivrer aux moyens de commande (14) ladite température d'air soufflé estimée ($ET_{AIR}$).

**13.** Installation selon la revendication 12, **caractérisée en ce qu'**elle comporte une cinquième sous-mémoire (24) dans laquelle se trouve stockée une troisième fonction décrivant des lois d'évolution de la température de l'air soufflé ($ET_{AIR}$) en fonction, d'une première part, des réglages (SM) des volets de mixage (6), d'une seconde part, d'une valeur de température d'eau estimée ($ET_{EAU}$), d'une troisième part, d'une valeur de température de l'évaporateur estimée ($ET_{EVA}$), et d'une quatrième part de l'état de fonctionnement (SP) du pulseur (9) du groupe moto-ventilateur (8).

**14.** Installation selon la revendication 13, **caractérisée en ce que** les premier (16), second (18), troisième (21) et quatrième (23) modules sont réalisés sous forme d'un composant électronique (15), de type puce à mémoire, chacune desdites première (17), seconde (19), troisième (20), quatrième (22) et cinquième (23) sous-mémoires formant ladite mémoire.

**15.** Installation selon l'une des revendications 13 et 14, **caractérisée en ce qu'**elle comprend des moyens de correction (26-31) propres à corriger l'une au moins des valeurs des températures estimées choisies parmi la température extérieure ($ET_{EXT}$) et la température d'eau ($ET_{EAU}$), pour délivrer une valeur de température estimée et corrigée ($E_C T_{EXT}$, $E_C T_{EAU}$) auxdits moyens de commande (14).

**16.** Installation selon la revendication 15, **caractérisée en ce que** les moyens de correction comportent :

- un cinquième module (27) propre à calculer une valeur théorique de température interne ($ET_{HAB}$) à partir de la température estimée de l'air soufflé ($ET_{AIR}$), de la température externe estimée ($ET_{EXT}$) et de l'état de fonctionnement (SP) du groupe moto-ventilateur (8,9),
- un sixième module (28) propre à calculer un premier écart de température ($DT_{HAB}$) entre la température interne mesurée ($T_{HAB}$) et la température interne théorique calculée ($ET_{HAB}$),
- un septième module (29) propre à calculer, à partir du premier écart de température ($DT_{HAB}$), un second écart de température d'eau ($DT_{EAU}$) et/ou un troisième écart de température externe ($DT_{EXT}$),
- un huitième module (30) propre à corriger la température d'eau estimée ($ET_{EAU}$) à un instant donné, à partir du second écart de température d'eau ($DT_{EAU}$), et/ou
- un neuvième module (31) propre à corriger la température externe estimée ($ET_{EXT}$) à un instant donné, à partir du troisième écart de température externe ($DT_{EXT}$).

**Patentansprüche**

**1.** Klimaanlage, insbesondere für den Innenraum eines Motorkraftfahrzeugs der Art, umfassend:

- einen Kältekreis mit zumindest einem Kompressor (1), einem Kondensator (2) und einem Verdampfer (3),
- einen Wärmekreis, umfassend einen Heizkörper (7), der mit einem Kühlfluid des Motors versorgt wird,
- ein Gehäuse (4), welches die Verteilungs- und Mischklappen (5, 6), den Heizkörper (7) sowie den Verdampfer (3) aufnimmt, um Außenluft und/oder Umluft zu behandeln und die behandelte Luft in den Innenraum (H) des Fahrzeugs zu verteilen,
- eine Motor-Ventilator-Einheit (8, 9), die das Gehäuse (4) mit Außenluft und/oder Umluft versorgen kann,
- einen Sensor (10), der die Temperatur in dem Innenraum ($T_{HAB}$), messen kann, welche auch Innentemperatur genannt wird,
- ein Erfassungsmodul (11), welches die Erfassung von Einstellparametern, durch einen in dem Innenraum befindlichen Insassen, der Anlage ermöglicht, unter denen sich zumindest die Temperatur befindet, die Erfassungstemperatur genannt wird, und
- eine Steuereinrichtung (14), die Einstellungen der Bestandteile 1 bis 9 des Kältekreises und des Wärmekreises, ausgehend von erfassten Parametern, der gemessenen Innentemperatur ($T_{HAB}$), einer Außentemperatur des Innenraumes ($T_{EXT}$) (auch Außentemperatur genannt), definieren kann,

**dadurch gekennzeichnet, dass** die Anlage eine erste Unterspeichereinrichtung (17) umfasst, die einen Temperaturwert speichern kann, sowie ein erstes Modul (16), welches der Steuereinrichtung (14) einen geschätzten Außentemperaturwert ($ET_{EXT}$) bereitstellen kann, und zwar abhängig von dem Betriebszustand der Anlage, der gemessenen Innentemperatur und der erfassten Temperatur:

- ausgehend von dem gemessenen Innentemperaturwert ($T_{HAB}$), wenn die Anlage nicht in Betrieb ist, oder wenn die Anlage in Betrieb ist und die gemessene Innentemperatur praktisch gleich ist zu der Erfassungstemperatur oder
- ausgehend von dem in der ersten Unterspeichereinheit (17) gespeicherten Temperaturwert, wenn die Anlage in Betrieb ist und die gemessene Innentemperatur im wesentlichen unterschiedlich von der Erfassungstemperatur ist.

2. Anlage nach Anspruch 1, **dadurch gekennzeichnet, dass** das erste Modul (16) die Außentemperatur schätzt, wenn die Anlage nicht in Betrieb ist, und zwar durch Identifikation mit dem Wert der gemessenen Innentemperatur ($T_{HAB}$).

3. Anlage nach einem der Ansprüche 1 und 2, **dadurch gekennzeichnet, dass** sie eine zweite Unterspeichereinheit (19) umfasst, vorgesehen zum Speichern von Daten, die repräsentativ sind für eine Gleichung oder für Betriebspunkte von zumindest einem der Bestandteile davon und vom ersten Modul (16) aus gelesen werden kann.

4. Anlage nach Anspruch 3, **dadurch gekennzeichnet, dass** die zweite Unterspeichereinheit (19) Daten speichert, welche eine Differentialgleichung bezüglich Konstanten bilden, die von geometrischen und strukturellen Merkmalen des Innenraumes abhängen, sowie bezüglich Energieströmen zwischen einerseits der Anlage und dem Innenraum (Eintrittsfluss) und andererseits dem Innenraum und der äußeren Umgebung (Austrittsfluss), wobei jeder der Flüsse abhängig ist von der gemessenen Innentemperatur ($T_{HAB}$), und dass das erste Modul (16) ausgebildet ist, um den Außentemperaturwert ($ET_{EXT}$) zu schätzen, wenn die Anlage in Betrieb ist und die gemessene Innentemperatur praktisch gleich ist zu der Erfassungstemperatur, und zwar durch Auflösung der genannten Differentialgleichung.

5. Anlage nach Anspruch 4, **dadurch gekennzeichnet, dass** die geometrischen und strukturellen Merkmale das Volumen des Innenraumes, die Energieaustauschfläche zwischen dem Innenraum und der äußeren Umgebung und die der Sonne ausgesetzte Oberfläche des Innenraumes umfassen.

6. Anlage nach Anspruch 3, **dadurch gekennzeichnet, dass** die zweite Unterspeichereinheit (19) theoretische Betriebspunkte speichert, ausgebildet in der Form einer ersten Korrespondenztabelle zwischen den Außentemperaturwerten und Werte-Multiplets, die jeweils Einstellwerte von Mischklappen (6) enthalten, und einer Innentemperatur, und dass das erste Modul (16) ausgebildet ist, um den Außentemperaturwert ($ET_{EXT}$) zu schätzen, wenn die Anlage in Betrieb ist und die gemessene Innentemperatur ($T_{HAB}$) praktisch gleich ist zu der Erfassungstemperatur, und zwar durch Bestimmung eines Multiplets aus der in der zweiten Unterspeichereinheit (19) gespeicherten Korrespondenztabelle, dessen Werte praktisch identisch sind zu jenen von aktuellen Einstellungen von Mischklappen (6) und der gemessenen Innenraumtemperatur ($T_{HAB}$).

7. Anlage nach einem der vorangegangenen Ansprüche, **dadurch gekennzeichnet, dass** das erste Modul (16) ausgelegt ist, um in der ersten Unterspeichereinheit (17) vor der Inbetriebnahme der Anlage den zuletzt geschätzten Wert (aktueller Wert genannt) der Außentemperatur ($ET_{EXT}$, $E_C T_{EXT}$) zu speichern.

8. Anlage nach einem der Ansprüche 1 bis 7, **dadurch gekennzeichnet, dass** die Steuereinrichtung (14) in der Lage ist, Einstellungen von Bestandteilen des Kältekreises und des Heizkreises einzustellen, ausgehend von unter anderem einem Betriebszustand (SE) und einer Wassertemperatur des Motors ($ET_{EAU}$), und dass die Anlage ein zweites Modul (18) umfasst, welches die Motorwassertemperatur ($ET_{EAU}$) schätzen kann, ausgehend von dem geschätzten Außentemperaturwert ($ET_{EXT}$) und dem Betriebszustand des Motors (SE), und um der Steuereinrichtung die geschätzte Wassertemperatur bereitzustellen.

9. Anlage nach Anspruch 8, **dadurch gekennzeichnet, dass** sie eine dritte Unterspeichereinrichtung (20) umfasst, in welcher eine erste Funktion gespeichert ist, die Wassertemperaturentwicklungsgesetzmäßigkeiten beschreibt, und zwar abhängig einerseits von der Zeit (t), die seit der ersten Inbetriebnahme des Motors vergangen ist, und andererseits eines geschätzten Außentemperaturwertes ($ET_{EXT}$ $E_CT_{EXT}$).

**10.** Anlage nach einem der Ansprüche 1 bis 9, **dadurch gekennzeichnet, dass** die Steuereinrichtung (14) in der Lage ist, Einstellungen der Bestandteile des Kältekreises und des Wärme- oder Heizkreises zu definieren, ausgehend von unter anderem einer Temperatur ($ET_{EVA}$) des Verdampfers (3), und dass die Anlage ein drittes Modul (21) umfasst, welches die Temperatur des Verdampfers (3) schätzen kann, ausgehend von dem Wert der geschätzten Außentemperatur ($ET_{EXT}$, $E_CT_{EXT}$) des gemessenen Innentemperaturwertes ($T_{HAB}$) und dem Betriebszustand (SC) des Kompressors (1), und um der Steuereinrichtung (14) die geschätzte Verdampfertemperatur ($ET_{EVA}$) bereitzustellen.

**11.** Anlage nach Anspruch 10, **dadurch gekennzeichnet, dass** sie eine vierte Unterspeichereinrichtung (22) umfasst, in welcher eine zweite Funktion gespeichert ist, die Entwicklungsgesetzmäßigkeiten der Temperatur des Verdampfers (3) speichert, und zwar abhängig von der Zeit (t), die seit der ersten Inbetriebnahme des Kompressors (1) vergangen ist und von einem geschätzten Außentemperaturwert ($ET_{EXT}$) sowie einem gemessenen Innentemperaturwert ($T_{HAB}$).

**12.** Anlage nach einem der Ansprüche 10 und 11, wenn abhängig von einem der Ansprüche 8 und 9, **dadurch gekennzeichnet, dass** sie ein viertes Modul (23) umfasst, welches die eingeblasene Lufttemperatur ($ET_{AIR}$), behandelt von dem Gehäuse und in den Innenraum (H) verteilt, schätzen kann, und zwar ausgehend von zumindest dem geschätzten Wassertemperaturwert ($ET_{EAU}$), dem geschätzten Verdampfertemperaturwert ($ET_{EVA}$), dem Betriebszustand (SP) der Motor-Ventilator-Einheit (8) und Einstellungen (SM) von Mischklappen (6) und um der Steuereinrichtung (14), die geschätzte Einblaslufttemperatur ($ET_{AIR}$) bereitzustellen.

**13.** Anlage nach Anspruch 12, **dadurch gekennzeichnet, dass** sie eine fünfte Unterspeichereinrichtung (24) umfasst, in welcher eine dritte Funktion gespeichert ist, welche Entwicklungsgesetzmäßigkeiten der eingeblasenen Lufttemperatur $ET_{AIR}$) speichern kann, und zwar abhängig von Einstellungen (SM) von Mischklappen (6), einem geschätzten Wassertemperaturwert ($ET_{EAU}$), einem geschätzten Verdampfertemperaturwert ($ET_{EVA}$) und schließlich dem Betriebszustand (SP) des Gebläses (9) der Motor-Ventilator-Einheit (8).

**14.** Anlage nach Anspruch 13, **dadurch gekennzeichnet, dass** die ersten, zweiten, dritten und vierten Module (16, 18, 21, 23) in der Form eines elektronischen Bauteils (15) dargestellt sind, vom Typ Speicherchip, wobei die ersten, zweiten, dritten, vierten und fünften Unterspeichereinrichtungen (17, 19, 20, 22, 24) den Speicher ausbilden.

**15.** Anlage nach einem der Ansprüche 13 und 14, **dadurch gekennzeichnet, dass** sie eine Korrektureinrichtung (26-31) umfasst, die zumindest einen der geschätzten Temperaturwerte korrigieren kann, ausgewählt unter der Außentemperatur ($ET_{EXT}$) und der Wassertemperatur ($ET_{EAU}$), um einen geschätzten und korrigierten Temperaturwert ($E_CT_{EXT}$, $E_CT_{EAU}$) an die Steuereinrichtung (14) auszugeben.

**16.** Anlage nach Anspruch 15, **dadurch gekennzeichnet, dass** die Korrektureinrichtung umfasst:

- ein fünftes Modul (27), welches einen theoretischen Innentemperaturwert ($ET_{HAB}$) berechnen kann, und zwar ausgehend von der geschätzten Einblaslufttemperatur ($ET_{AIR}$) und der geschätzten Außentemperatur ($ET_{EXT}$) sowie dem Betriebszustand (SP) der Motor-Ventilator-Einheit (8, 9),
- ein sechstes Modul (28), welches einen ersten Temperaturunterschied ($DT_{HAB}$) zwischen der gemessenen Innentemperatur ($T_{HAB}$) und der theoretisch errechneten Innentemperatur ($ET_{HAB}$) errechnen kann,
- ein siebtes Modul (29), welches, ausgehend von dem ersten Temperaturunterschied ($DT_{HAB}$), einen zweiten Wassertemperaturunterschied ($DT_{EAU}$) und/oder einen dritten Außentemperaturunterschied ($DT_{EXT}$) berechnen kann,
- ein achtes Modul (30), welches die geschätzte Wassertemperatur ($ET_{EAU}$) zu einem gegebenen Zeitpunkt korrigieren kann, und zwar ausgehend von dem zweiten Wassertemperaturunterschied ($DT_{EAU}$) und/oder
- ein neuntes Modul (31), welches die geschätzte Außentemperatur ($ET_{EXT}$) bei einem gegebenen Zeitpunkt korrigieren kann, und zwar ausgehend von dem dritten Außentemperaturunterschied ($DT_{EXT}$).

## Claims

**1.** Air conditioning installation, notably for the cabin of a car with an engine, of the type comprising:

- a so-called "cold" loop including at least one compressor (1), one condenser (2) and one evaporator (3),

- a so-called "hot" loop including a heating radiator (7) supplied with a cooling fluid from the engine,

- a casing (4), housing the distribution (5) and mixing (6) flaps, the heating radiator (7) and the said evaporator (3), in order to treat external and/or recirculated air and distribute the treated air in the vehicle cabin (H),

- a engine fan unit (8, 9) able to supply the said casing (4) with external and/or recirculated air,

- a sensor (10) able to measure the temperature in the cabin ($T_{CAB}$) referred to as the internal temperature,

- an entry module (11) suitable for allowing entry of the installation adjustment parameters, including at least the temperature, referred to as the entered temperature, by a passenger housed.in the cabin, and

- control means (14) able to define settings for the components (1-9) of the cold and hot loops from the entered parameters, the measured internal temperature ($T_{CAB}$), a temperature outside the cabin ($T_{EXT}$), referred to as the external temperature,

**characterised in that** it comprises a first submemory (17) able to store a temperature value, and a first module (16) able to supply to the control means (14) an estimated external temperature value ($ET_{EXT}$) according to the state of functioning of the installation and the measured internal temperature and entered temperature values:

* from the value of the measured internal temperature ($T_{CAB}$), when the installation is not functioning or when the said installation is functioning and the internal temperature measured is substantially equal to the entered temperature, or

* from the value of the temperature stored in the first submemory (17), when the installation is functioning and the measured internal temperature is substantially different from the entered temperature.

2. Installation according to Claim 1, **characterised in that** the first module (16) estimates the temperature of the external temperature, when the installation is not functioning, by identification with the value of the measured internal temperature ($T_{CAB}$).

3. Installation according to one of Claims 1 and 2,
   **characterised in that** it comprises a second submemory (19) able to store data representing an equation or operating points of one of its parts at least, and able to be read by the first module (16).

4. Installation according to Claim 3, **characterised in that** the second submemory (19) stores data forming a differential equation relating to constants depending on the geometric and structural characteristics of the cabin, and to energy flows between on the one hand the installation and the cabin (incoming flow), and on the other hand the said cabin and the outside (outgoing flow), each of the said flows depending on the measured internal temperature ($T_{CAB}$), and **in that** the first module (16) is arranged to estimate the value of the external temperature ($ET_{EXT}$), when the said installation is functioning and the measured internal temperature is substantially equal to the temperature entered, by solving the said differential equation.

5. Installation according to Claim 4, **characterised in that** the geometric and structural characteristics comprise the volume of the cabin, the energy exchange surface between the cabin and the outside, and the surface of the cabin exposed to the sun.

6. Installation according to Claim 3, **characterised in that** the second submemory (19) stores theoretical functioning points arranged in the form of a first look-up table between external temperature values and multiplets each containing values of settings of the mixing flaps (6) and an internal temperature, and **in that** the said first module (16) is arranged to estimate the value of the external temperature ($ET_{EXT}$), when the installation is functioning and the measured internal temperature ($T_{CAB}$) is substantially equal to the temperature entered, by determining a multiplet of the look-up table stored in the second submemory (19), whose values are substantially identical to those of the current settings of the mixing flaps (6) and of the measured internal temperature ($T_{CAB}$).

7. Installation according to one of the preceding claims,

**characterised in that** the first module (16) is able to store, in the first submemory (17), before the said installation is started up, the last estimated value (referred to as the current value) of the external temperature ($ET_{ExT}$, $E_CT_{EXT}$).

8.  Installation according to one of Claims 1 to 7,
    **characterised in that** the control means (14) are able to define the settings of the components of the cold and hot loops from, in addition, a state of functioning (SE) and a water temperature of the engine ($ET_{WATER}$), and **in that** the said installation comprises a second module (18) able to estimate the temperature of the water in the engine ($ET_{WATER}$) from the value of the estimated external temperature ($ET_{EXT}$) and the state of functioning of the said engine (SE), and to deliver to the control means the said estimated temperature of the water.

9.  Installation according to Claim 8, **characterised in that** it includes a third submemory (20) in which there is stored a first function describing laws for changes in the water temperature ($ET_{WATER}$) as a function on the one hand of the time (t) elapsed since a first start-up of the engine and on the other hand an estimated external temperature value ($ET_{EXT}$, $E_CT_{EXT}$).

10. Installation according to one of Claims 1 to 9,
    **characterised in that** the control means (14) are able to define the settings of the components of the cold and hot loops from, in addition, a temperature ($ET_{EVA}$) of the evaporator (3), and **in that** the said installation comprises a third module (21) able to estimate the temperature of the evaporator (3) from the value of the estimated external temperature ($ET_{EXT}$, $E_CT_{EXT}$), the value of the measured internal temperature ($T_{CAB}$) and the state of functioning (SC) of the compressor (1), and to deliver to the control means (14) the said estimated temperature of the evaporator ($ET_{EVA}$).

11. Installation according to Claim 10, **characterised in that** it has a fourth submemory (22) in which there is stored a second function describing laws for changes in the temperature of the evaporator (3) as a function of firstly the time (t) elapsed since a first start-up of the compressor (1), secondly an estimated external temperature value ($ET_{EXT}$), and thirdly a measured internal temperature value ($T_{CAB}$).

12. Installation according to one of Claims 8 and 9 combined with one of Claims 10 and 11, **characterised in that** it comprises a fourth module (23) able to estimate the temperature of the blown air ($ET_{AIR}$), treated by the casing and distributed in the cabin (H), from at least the estimated value of the water temperature ($ET_{WATER}$). the value of the estimated evaporator temperature ($ET_{EVA}$), the state of functioning (SP) of the motor fan unit (8) and the settings (SM) of the mixing flaps (6), and to deliver to the control; means (14) the said estimated blown air temperature ($ET_{AIR}$).

13. Installation according to Claim 12, **characterised in that** it has a fifth submemory (24) in which there is stored a third function describing laws for changes in the temperature of the blown air ($ET_{AIR}$) as a function of firstly the settings (SM) of the mixing flaps (6), secondly an estimated water temperature value ($ET_{WATER}$), thirdly an estimated evaporator temperature value ($ET_{EVA}$), and fourthly the state of functioning (SP) of the fan (9) of the motor fan unit (8).

14. Installation according to Claim 13, **characterised in that** the first (16), second (18), third (21) and fourth (23) modules are produced in the form of an electronic component (15), of the memory chip type, each of the said first (17), second (19), third (20), fourth (22) and fifth (23) submemories forming the said memory.

15. Installation according to one of Claims 13 and 14,
    **characterised in that** it comprises correction means (26-31) able to correct at least one of the values of the estimated temperatures chosen from amongst the external temperature ($ET_{EXT}$) and the water temperature ($ET_{WATER}$) in order to deliver an estimated and corrected temperature value ($E_CT_{EXT}$, $E_CT_{WATER}$) to the said control means (14).

16. Installation according to Claim 15,; **characterised in that** the correction means include:

    -   a fifth module (27) able to calculate a theoretical internal temperature value ($ET_{CAB}$) from the estimated temperature of the blow air ($ET_{AIR}$), the estimated external temperature ($ET_{EXT}$) and the state of functioning (SP) of the motor fan unit (8, 9),

    -   a sixth module (28) able to calculate a first temperature difference ($DT_{CAB}$) between the measured internal temperature ($T_{CAB}$) and the calculated theoretical internal temperature ($ET_{CAB}$),

-   a seventh module (29) able to calculate, from the first temperature difference ($DT_{CAB}$), a second water temperature difference ($DT_{WATER}$) and/or a third external temperature difference ($DT_{EXT}$),

-   an eighth module (30) able to correct the estimated water temperature ($ET_{WATER}$) at a given moment, from the second water temperature difference ($DT_{WATER}$), and/or

-   a ninth module (31) able to correct the estimated external temperature ($ET_{EXT}$) at a given moment, from the third external temperature difference ($DT_{EXT}$).

FIG.1

FIG. 2

EP 0 839 678 B1

ETAT MOTEUR (SE)

(1) MARCHE

(0) ARRET

t

FIG. 3A

TEMPERATURE EAU ($ET_{EAU}$)

100°C
50°C
0°C

$ET_{EXT}$

t

FIG. 3B

ETAT COMPRESSEUR (SG)

(1) MARCHE

(0) ARRET

t

FIG. 4A

TEMPERATURE EVAPORATEUR ($ET_{EVA}$)

$T_{HAB}$

0°C

t

FIG. 4B

TEMPERATURE AIR SOUFFLE ($ET_{AIR}$)

0

MIXAGE (SM)

100 %

FIG. 5

REGLAGE MIXAGE (SM)

100 %

ECO    AC

-20°C    0    30°C    $ET_{EXT}$

FIG. 6